# EUROPEAN PATENT APPLICATION

(11) **EP 3 001 284 A1**
(43) Date of publication of application: **30.03.2016**
(21) Application number: 13900740.5
(22) Date of filing: 31.12.2013
(51) Int. Cl.: G06F 3/023

(54) **METHOD AND DEVICE FOR STRING INPUT CONTROL**

(71) Applicant: Huawei Device Co., Ltd., Shenzhen, Guangdong 518129 (CN)
(72) Inventor: YU, Liang, Shenzhen Guangdong 518129 (CN)
(74) Representative: Pfenning, Meinig & Partner mbB
(86) International application number: PCT/CN2013/091004
(87) International publication number: WO 2015/100574

(57) **Abstract**

A character string input control method and apparatus are disclosed. Implementation of the method includes: receiving a first character string and a second character string that are input, where the first character string is input before the second character string; identifying the first character string, determining whether the first character string has a substring that matches the second character string, and if the first character string has a substring that matches the second character string, marking the substring with a block mark; and after an instruction for selecting the block mark is received, moving a cursor to a position corresponding to the selected block mark. After a user inputs the second character string, the second character string can be automatically matched in the first character string; that is, if the user needs to position the cursor, automatic positioning can be implemented simply by inputting a character corresponding to a position that needs to be located. Besides, the position is marked by means of a block, so that the user can conveniently move the cursor to the wanted position, and therefore efficiency of error correction can be improved.

## Description

### TECHNICAL FIELD

The present invention relates to the field of computer technologies, and in particular, to a character string input control method and apparatus.

### BACKGROUND

In a character input process, after a user inputs a character string, if the user finds that a few errors exist in the input character string, the user needs to make corrections after finding the errors. In the field of computer technologies, the character string input by the user may be various character strings, such as English letters, symbols, and Chinese characters.

At present, after finding that the input character string has errors, the user needs to move an input cursor to a precise position for correction, that is, a spacing between two characters. Because a spacing between characters of a character string is very small, regardless of whether the user performs finger contact selection or uses a back (back) key to backspace, it is difficult to perform the operation. Therefore, it is difficult for the user to move the cursor to a wanted position, and efficiency of correcting an input error is low.

### SUMMARY

Embodiments of the present invention provide a character string input control method and apparatus, to move a cursor to a wanted position conveniently and to improve efficiency of error correction.

According to a first aspect of the embodiments of the present invention, a character string input control method is provided, including:
receiving a first character string and a second character string that are input, where the first character string is input before the second character string;
identifying the first character string, determining whether the first character string has a substring that matches the second character string, and if the first character string has a substring that matches the second character string, marking the substring with a block mark; and
after an instruction for selecting the block mark is received, moving a cursor to a position corresponding to the selected block mark.

With reference to the implementation manner of the first aspect, in a first possible implementation manner, the receiving a first character string and a second character string that are input includes:
receiving an input character, and acquiring an input time interval between the currently input character and a previous character of the current character, and if the input time interval is greater than a predetermined threshold, using characters that are input before the current character as the first character string, and using the current character and characters that are input later as the second character string; or
acquiring an input character, and if the input character is a space character, using characters that are input before the space character as the first character string, and using characters that are input after the space character as the second character string.

With reference to the first possible implementation manner of the first aspect, in a second possible implementation manner, the predetermined threshold of the input time interval is 800 milliseconds to 1000 milliseconds.

With reference to the implementation manner of the first aspect, in a third possible implementation manner, the determining whether the first character string has a substring that matches the second character string includes:
performing fuzzy pattern matching on the first character string by using the second character string, and if the first character string has consecutive characters that have a same character set, a same length, and a same quantity of times of occurrence of a same character as the second character string, determining that the consecutive characters are the substring, which matches the second character string, in the first character string.

With reference to the implementation manner of the first aspect, or the first, the second, or the third possible implementation manner of the first aspect, in a fourth possible implementation manner, after the marking the substring with a block mark, the method further includes:
receiving a replacement instruction input by a user, and replacing the substring with the second character string according to the replacement instruction.

With reference to the fourth possible implementation manner of the first aspect, in a fifth possible implementation manner, the receiving a replacement instruction input by a user, and replacing the substring with the second character string according to the replacement instruction includes: if the user selects the block mark and holds the block mark for more than a predetermined time, and characters of the second character string are different from characters of the substring, determining that the replacement instruction input by the user is received, and replacing the substring with the second character string.

With reference to the fourth possible implementation manner of the first aspect, in a sixth possible implementation manner, the moving a cursor to a position corresponding to the selected block mark includes:
moving the cursor before the replaced substring.

According to a second aspect of the embodiments of the present invention, a character string input control apparatus is provided, including:
a character receiving unit, configured to receive a first character string and a second character string that are input, where the first character string is input before the second character string;
a character identification unit, configured to identify the first character string that is received by the character receiving unit, and determine whether the first character string has a substring that matches the second character string;
a character marking unit, configured to: if a determining result of the character identification unit is that the first character string has a substring that matches the second character string, mark the substring with a block mark;
an instruction receiving unit, configured to receive an instruction for selecting the block mark; and
a cursor control unit, configured to: after the instruction receiving unit receives the instruction for selecting the block mark, move a cursor to a position corresponding to the selected block mark.

With reference to the implementation manner of the second aspect, in a first possible implementation manner, the character receiving unit includes: a character receiving subunit and a character string segmentation unit, where
the character receiving subunit is configured to receive an input character, and acquire an input time interval between the currently input character and a previous character of the current character; and
the character string segmentation unit is configured to: if the input time interval acquired by the character receiving subunit is greater than a predetermined threshold, use characters that are input before the current character as the first character string, and use the current character and characters that are input later as the second character string; or if the character received by the character receiving subunit is a space character, use characters that are input before the space character as the first character string, and use characters that are input after the space character as the second character string.

With reference to the first possible implementation manner of the second aspect, in a second possible implementation manner, the character string segmentation unit is configured to: if the input time interval acquired by the character receiving subunit is greater than the predetermined threshold, use the characters that are input before the current character as the first character string, and use the current character and the characters that are input later as the second character string, where the predetermined threshold is 800 milliseconds to 1000 milliseconds.

With reference to the implementation manner of the second aspect, in a third possible implementation manner, the character identification unit is configured to perform fuzzy pattern matching on the first character string by using the second character string, and if the first character string has consecutive characters that have a same character set, a same length, and a same quantity of times of occurrence of a same character as the second character string, determine that the consecutive characters are the substring, which matches the second character string, in the first character string.

With reference to the implementation manner of the second aspect, or the first, the second, or the third possible implementation manner of the second aspect, in a fourth possible implementation manner, the instruction receiving unit is further configured to receive a replacement instruction input by a user; and
the character string input control apparatus further includes a replacement control unit, configured to: if the instruction receiving unit receives the replacement instruction input by the user, replace the substring with the second character string according to the replacement instruction.

With reference to the fourth possible implementation manner of the second aspect, in a fifth possible implementation manner, the instruction receiving unit is further configured to determine whether the user selects the block mark and holds the block mark for more than a predetermined time; and
the replacement control unit is configured to: if the instruction receiving unit determines that the user selects the block mark and holds the block mark for more than the predetermined time, and characters of the second character string are different from characters of the substring, determine that the replacement instruction input by the user is received, and replace the substring with the second character string.

With reference to the fourth possible implementation manner of the second aspect, in a sixth possible implementation manner, the cursor control unit is configured to: if the instruction receiving unit determines that the user selects the block mark and holds the block mark for more than the predetermined time, move the cursor before the replaced substring.

It can be seen from the foregoing technical solutions that the embodiments of the present invention have the following advantages: After a user inputs the second character string, the second character string can be automatically matched in the first character string; that is, if the user needs to position the cursor, automatic positioning can be implemented simply by inputting a character corresponding to a position that needs to be located. Besides, the position is marked by means of a block, so that the user can conveniently move the cursor to the wanted position, and therefore efficiency of error correction can be improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method according to an embodiment of the present invention;
FIG. 2 is a schematic flowchart of a method according to an embodiment of the present invention;
FIG. 3 is a schematic structural diagram of a character string input control apparatus according to an embodiment of the present invention;
FIG. 4 is a schematic structural diagram of a character string input control apparatus according to an embodiment of the present invention;
FIG. 5 is a schematic structural diagram of a character string input control apparatus according to an embodiment of the present invention;
FIG. 6 is a schematic structural diagram of a character string input control apparatus according to an embodiment of the present invention; and
FIG. 7 is a schematic structural diagram of a mobile phone according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

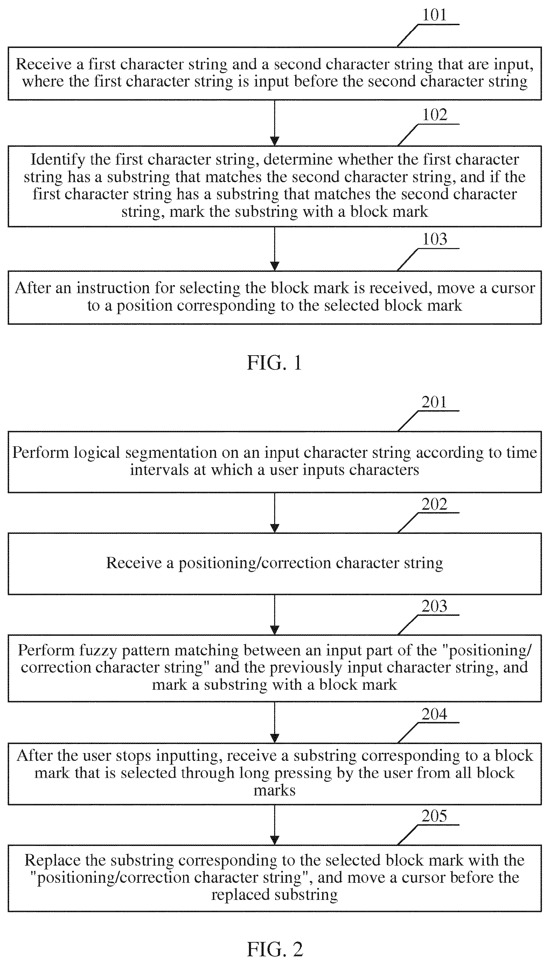

An embodiment of the present invention provides a character string input control method, as shown in FIG. 1, including:
101: Receive a first character string and a second character string that are input, where the first character string is input before the second character string.

The first character string and the second character string are both character strings, and "first" and "second" are merely used to distinguish two logically different character strings, and should not be understood as other limiting meanings. A length of a character string increases when a user inputs characters, the character string is divided into segments, and each segment of the character string may be considered as one independent character string. Two examples of character string segmentation solutions are given in this embodiment of the present invention. It should be noted that there may be many character string segmentation solutions, and the following examples should not be understood as limitations on this embodiment of the present invention. Examples of the character string segmentation solutions provided in this embodiment of the present invention are as follows: Optionally, the receiving a first character string and a second character string that are input includes: receiving an input character, and acquiring an input time interval between the currently input character and a previous character of the current character, and if the input time interval is greater than a predetermined threshold, using characters that are input before the current character as the first character string, and using the current character and characters that are input later as the second character string; or acquiring an input character, and if the input character is a space character, using characters that are input before the space character as the first character string, and using characters that are input after the space character as the second character string.

Generally, when a user finds an input error, a phenomenon that the user habitually pauses inputting occurs. Based on this, the solution is designed to determine whether there is an input error by means of an input time interval. In this way, an automatic detection function can be implemented, and the user does not need to input an instruction that is used for instructing a terminal to perform segmentation or indicating an input error, thereby reducing a correction time and improving input efficiency. It should also be noted that in the foregoing examples of segmentation, a space character is used to instruct the terminal to perform character string segmentation, and actually, any other default instruction may be used, for example, pressing a shift key twice, or a combination key such as ctrl+G, both of which are applicable. The using a space character to instruct the terminal to perform character string segmentation should not be understood as a uniqueness limitation on this embodiment of the present invention.

For the solution of using the input time interval to determine segmentation, this embodiment of the present invention further provides more detailed descriptions by using an example, which is specifically as follows: Optionally, the predetermined threshold is 800 milliseconds to 1000 milliseconds. In this embodiment of the present invention, a time of inputting each character may be recorded, an input time interval between adjacent characters is calculated, the input time interval between adjacent characters is recorded by using a long integer variable, and then whether segmentation is needed is determined by comparing the long integer variable with the predetermined threshold. It should be noted that a variable used for recording an input time is not necessarily a long integer variable, and may be an integer variable or another variable, as long as the variable can be used to record a time accurately. The predetermined threshold is used to control a reference time of segmentation. In this embodiment, a reference value of 800 milliseconds to 1000 milliseconds is given, the threshold may vary according to input habits of different people, and therefore, the threshold may be set by a user.

102: Identify the first character string, determine whether the first character string has a substring that matches the second character string, and if the first character string has a substring that matches the second character string, mark the substring with a block mark.

In this embodiment of the present invention, a rule for matching the substring with the second character string may be set according to different matching algorithms, for example, the substring is identical with the second character string, that is, character quantities are the same, character sets are the same, and character sequences are the same; or may be fuzzy matching between the substring the second character string, that is, character quantities are the same, character sets are the same, quantities of each character are the same, but character sequences are not necessarily the same. A specific matching rule is not uniquely limited in this embodiment of the present invention.

For the solution of identifying the first character string, reference may be made to various algorithms of character identification, which are not limited in this embodiment of the present invention. This embodiment of the present invention provides another preferable implementation solution in implementation solutions of the present invention, that is, a solution of fuzzy pattern matching, which is specifically as follows:

Optionally, the determining whether the first character string has a substring that matches the second character string includes: performing fuzzy pattern matching on the first character string by using the second character string, and if the first character string has consecutive characters that have a same character set, a same length, and a same quantity of times of occurrence of a same character as the second character string, determining that the consecutive characters are the substring, which matches the second character string, in the first character string.

By using the solution of fuzzy pattern matching, the user does not need to input characters exactly the same as that of previous erroneous input to determine a position of an error of the previous input, which makes positioning more convenient and fast. In addition, a convenient condition is also provided for correcting the error, which is described in further detail in subsequent embodiments.

103: After an instruction for selecting the block mark is received, move a cursor to a position corresponding to the selected block mark.

In the foregoing embodiment, after a user inputs the second character string, the second character string can be automatically matched in the first character string; that is, if the user needs to position the cursor, automatic positioning can be implemented simply by inputting a character corresponding to a position that needs to be located. Besides, the position is marked by means of a block, so that the user can conveniently move the cursor to the wanted position, and therefore efficiency of error correction can be improved.

Based on the solution of fuzzy pattern matching used by this embodiment of the present invention, this embodiment of the present invention further provides a more preferable feasible implementation solution of error correction, which is specifically as follows: Further, after the marking the substring with a block mark, the method further includes: receiving a replacement instruction input by a user, and replacing the substring with the second character string according to the replacement instruction. In the foregoing solution, if a user finds an input error, to correct the input error, the user only needs to input a correct character once and select a position that needs to be corrected, which can further improve error correction efficiency.

In this embodiment of the present invention, the replacement instruction may be explicit or may be implicit. An explicit instruction may be an input replacement instruction, and an implicit instruction may be a predefined operation manner, for example, when the user selects the block mark and holds the block mark for more than a predetermined time, it may be considered that the user inputs the replacement instruction. Optionally, the receiving a replacement instruction input by a user, and replacing the substring with the second character string according to the replacement instruction includes: if the user selects the block mark and holds the block mark for more than a predetermined time, and characters of the second character string are different from characters of the substring, determining that the replacement instruction input by the user is received, and replacing the substring with the second character string.

In this embodiment, a solution in which a user selects the block mark and holds the block mark for more than a predetermined time is used to determine that the user needs to perform character replacement, and this solution may be compatible with a solution of using a short tap to position the cursor. In addition, in a solution of this embodiment, if a user finds an input error, to correct the input error, the user only needs to input a correct character once and select a position that needs to be corrected, and the cursor is positioned at a position corresponding to an erroneous character. In addition to that error correction is implemented by performing inputting once, because the cursor is already moved to the position corresponding to the erroneous character, besides error correction, an operation of adding a character at the position of the error may be performed without needing to perform character positioning again.

Examples of a solution of replacing an input error that needs to be replaced and a solution of positioning a cursor are provided in the foregoing embodiments. An embodiment of the present invention further provides a solution for a case in which an input error does not need to be replaced, for example, a solution for a case in which a character needs to be added and no character needs to be replaced, which is specifically as follows: Optionally, the moving a cursor to a position corresponding to the selected block mark includes: moving the cursor before the replaced substring. In the foregoing solution, because the second character string is the same as the substring at the located position, no replacement operation is needed, and only moving of the cursor is needed.

The solutions of the embodiments of the present invention are described in further detail by using examples in the following embodiment.

Some technical terms involved in the following embodiment are described below as follows:
First: Fuzzy pattern matching. Fuzzy pattern matching between two character strings A and B satisfies the following three conditions: 1. A and B have equal lengths, that is, A and B have same quantities of characters; 2. A and B have equal character sets (case insensitive), that is, each character in A exists in B, and each character in B also exists in A; 3. Same characters (case insensitive) in A and B occur same quantities of times. For example, aabc matches baca, aacb, and Bcaa.
Second: Logical segmentation of a character string. In this embodiment, logical segmentation is performed on an input character string according to an input time interval of a user. A specific solution is as follows: for an input character string, a time interval between input actions of two adjacent characters is detected, if a time interval between an input moment of a previous character and an input moment of a later character is greater than a predetermined threshold (for example, 800 milliseconds to 1000 milliseconds), the character string is logically segmented between the two characters, where the previous character is used as the end of a logically previous segment, and the later character is used as the start of a logically later segment.
   For example, the input character string is ab, if an interval between an input moment of a and an input moment of b is less than or equal to the predetermined threshold, it is considered that ab is input consecutively; if an interval between an input moment of a and an input moment of b is greater than the predetermined threshold, it is considered that a and b belong to two different input time periods, where a belongs to a first character string, and b belongs to a second character string. Based on this, an entire character string input by a user may be segmented into different fields according to an input time interval between characters that are adjacent in position. For example, connectors are used to indicate time lengths of input intervals, a-b-c-d—e-f-g—-h-i-j may be logically segmented into three segments abcd, efg, hij according to input time intervals, and therefore, there are three character string segments.
   The foregoing logical segmentation may be reflected in an appearance of a character string, or may be reflected only in code logic.
Third: Positioning/correction character string refers to the last logic segment, in a character string input by a user, according to a sequence from the beginning to the end after the character string input by the user is logically segmented according to an input time interval. Connectors are used to indicate time lengths of input intervals. For example, if the character string input by the user is a-b-c-d—-e-f-g—-h-i-j, and is logically segmented into three segments: abc, efg, hij, hij is identified as the positioning/correction character string, that is, the second character string described in the foregoing embodiments. The positioning/correction character string is identified according to the foregoing manner, and a function of the positioning/correction character string is to help the user to locate a to-be-corrected position in the input character string by means of fuzzy pattern matching.

As shown in FIG. 2, a method provided in an embodiment of the present invention includes the following steps:
201: Perform logical segmentation on an input character string according to time intervals at which a user inputs characters.

A specific implementation manner for performing logical segmentation may be as follows: storing a long integer variable, recording an input time of a current character each time the user inputs a character, and if a time for waiting until a next character is input exceeds a specified threshold (for example, 800 milliseconds or 1000 milliseconds), regarding that the current character is the end of a segment and a character input later belongs to a next segment.

202: Receive a positioning/correction character string.

If the user finds that the input character string includes an error, the user pauses for a short time (for example, ≥ 1000 milliseconds), pausing is a natural reaction when the user finds an error during an input operation. In this case, a cursor does not need to be moved, and a character string is input at the end of the input character string, and this character string is identified as the "positioning/correction character string" according to a definition in this embodiment of the present invention.

203: In a process of inputting the "positioning/correction character string" by the user, perform fuzzy pattern matching between an input part of the "positioning/correction character string" and the previously input character string, and mark all matching substrings in the previously input character string with block marks (for example, marking all matching substrings by using translucent highlight color blocks).

It should be noted that a quantity of the block marks obtained through fuzzy pattern matching may be one, or more than one, and is not limited to only one.

204: After the user stops inputting, receive a substring corresponding to a block mark that is selected through long pressing by the user from all the block marks.

205: Replace the substring corresponding to the selected block mark with the "positioning/correction character string", and move the cursor before the replaced substring.

In this embodiment of the present invention, long pressing not a short tap is used as a replacement action, so that the user can tap a line between two characters by means of a short tap to move the cursor to the middle of the two characters (that is, the tapped position); in this way, the user can correct an error by using a method of replacing the selected block with the "positioning/correction character string", and can also correct an error by using a conventional method of moving the cursor, thereby implementing technical compatibility.

This embodiment of the present invention brings at least the following technical effects:
1. The last segment in a character string input by a user after logical segmentation is performed on the character string according to a time interval is selected as a "positioning/correction character string". This design conforms to a using behavior of the user in two aspects: first, when the user finds an input error, the user looks back to check an error position, and stops the current input naturally, and therefore, an obvious input time interval occurs; second, an operation that requires least effort of the user is continuing inputting at the end of the current input, and therefore using an "end segment" as the "positioning and replacement character string" can facilitate operation of the user.
2. After the error position of the input character string is located, an error segment is marked with a block mark, compared with that the user needs to tap a line between two characters to position the cursor, tapping the block mark is equivalent to changing selection of a line into selection of a surface, which improves operation convenience.
3. A pattern matching algorithm is fuzzy pattern matching, that is, it is only required that character sets (character repetition is allowed) and lengths are the same, and it is not required that character sequences are entirely the same, which facilitates inputting by the user and provides convenience especially for correction of an error in reverse input order.
4. The positioning/correction character string has both functions of positioning and replacement. When the user taps the block mark to replace a substring, the user does not need to delete an original erroneous character string and then input a correct character string, thereby reducing input operations.
5. When the user taps the block mark to locate and replace the substring, the cursor jumps to the front rather than the rear of the tapped block mark. This detail design is mainly for deleting a character conveniently; if the cursor jumps to the rear of the tapped block mark, only a character in the block mark can be deleted without moving the cursor; and if the cursor jumps before the tapped block mark, only a character before the block mark can be deleted without moving the cursor, and the tapped block mark is not affected.

Based on the solution of this embodiment of the present invention, examples of five possible application scenarios are given in this embodiment of the present invention, which are specifically as follows:
First: Correct. Assuming that there is an input character string huaweizhongdaun auto, obviously, au is mistakenly written as ua in duan.
   In this case, operations of this embodiment of the present invention are as follows:
   1. After an input interval exceeds a predetermined threshold, a user inputs ua at the end of huaweizhongdaun auto. A current input box displays 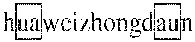 autoua, and software identifies a current "positioning/correction character string" ua according to the input time interval.
   2. Fuzzy pattern matching is performed between 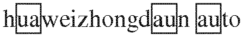 and ua, where a matching segment is marked with a block, and may also be colored using a color block. There are two color blocks in this example.
   3. The user long presses the au that the user wants to replace (it is much easier to tap a block than to tap a space between two characters), the "positioning/correction character string" ua disappears from the end of the current character string and replaces a substring that corresponds to a block tapped by the user, the input character string becomes huaweizhongdluan auto, and an input cursor stays between d and ua, that is, before the replaced au.
   4. If the user taps any place in a blank area at the end of the input character string, the cursor goes back to the end, and a next input step may be performed.

   Particularly, if after inputting the "positioning/correction character string", the user further performs inputting without long pressing any matching block, the current "positioning/correction character string" is considered as a part of normal input, and the last segment among logical segments of an input character string is automatically identified as a new "positioning/correction character string". Therefore, input of the "positioning/correction character string" is included in the normal input only, and does not affect the normal input.
Second: Correct and add.
   Assuming that a character string 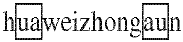 is input, au needs to be replaced with ua and d needs to be add before the replaced au.
   A scenario in this case is similar to the scenario of correction. A user inputs a "positioning/correction character string" ua at the end, and long presses the second block in the character string, and after a character string au corresponding to the second block is replaced with ua, a cursor stays before the ua after correction, and the user can add a new character d without needing to adjust a position of the cursor.
Third: Correct and delete.
   Assuming that a character string huaweizhongdxyaun is input, and a user wants to change the character string into huaweizhongduan. The user inputs a "positioning/correction character string" ua at the end, and long presses the second block in the character string, and after au in the second block is replaced with ua, a cursor stays before the ua after correction, and the user can delete redundant characters xy without needing to adjust a position of the cursor.
Fourth: Add only.
   In this case, a "positioning and replacement character string" only serves a function of positioning.
   Assuming that a character string 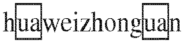 is input, a user inputs a "positioning and replacement character string" ua at the end. The user long presses a block ua in the huaweizhonguan, the "positioning and replacement character string" ua disappears, a cursor moves to the middle of g and ua, and the user can add a new character without needing to adjust a position of the cursor.
Fifth: Delete only.

Delete only is similar to add only, a "positioning and replacement character string" only serves a function of positioning.

According to the foregoing examples, it can be determined that a user operation can be simplified and usability can be improved by using the solution of this embodiment of the present invention. Specific details are as follows:

Comparison of costs of error correction by a user:

It is assumed that a cost of tapping a key on a soft keyboard (or tapping a block) once by the user is 1, and a cost of tapping with a finger by the user to move a cursor to the middle of two characters is 3 (which includes aligning and pressing, and the operation needs to be preformed again in the case of pressing without aligning).

An example is as follows:

To change huaweizhongdaun auto into huaweizhongduan auto,
a minimum cost of a normal operation is:
3 is needed for moving a cursor to the middle of dau and n;
2 is needed for tapping a delete key twice to delete au of dau;
2 is needed for performing inputting twice to input ua; and
1 is needed for moving the cursor back to the end; 8 is needed in total.

A minimum cost of the solution of this embodiment of the present invention is:
2 is need for inputting ua at the end of the input character string;
1 is need for tapping (long pressing) a required block mark; and
1 is needed for moving a cursor back to the end; 4 is needed in total.

Therefore, according to this embodiment of the present invention, when a user inputs a character string, if the user finds that the input character string has a problem such as including characters in reverse order, lacking a character, or having a redundant character, an action cost of error correction is greatly reduced.

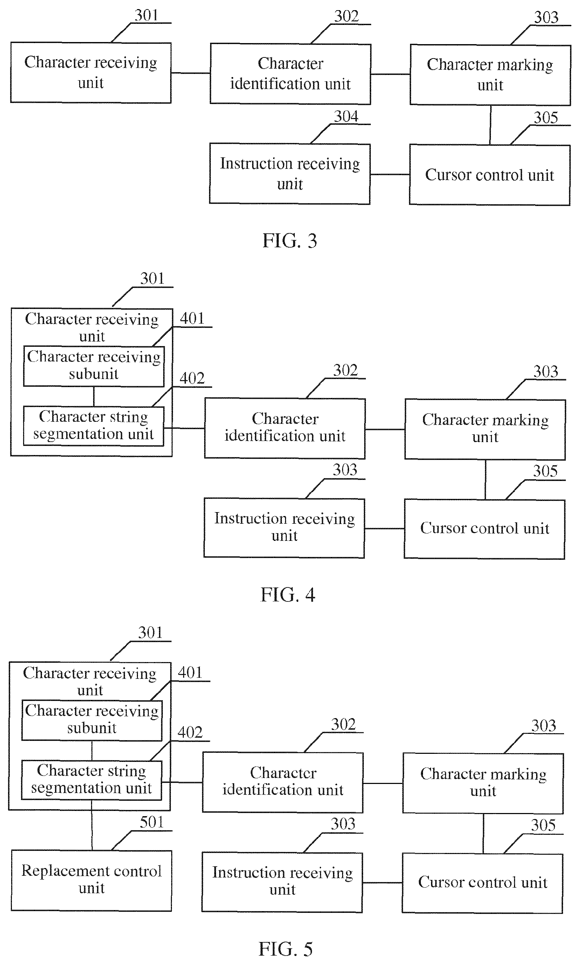

An embodiment of the present invention further provides a character string input control apparatus, as shown in FIG. 3, including:
a character receiving unit 301, configured to receive a first character string and a second character string that are input, where the first character string is input before the second character string;
a character identification unit 302, configured to identify the first character string that is received by the character receiving unit 301, and determine whether the first character string has a substring that matches the second character string;
a character marking unit 303, configured to: if a determining result of the character identification unit 302 is that the first character string has a substring that matches the second character string, mark the substring with a block mark;
an instruction receiving unit 304, configured to receive an instruction for selecting the block mark; and
a cursor control unit 305, configured to: after the instruction receiving unit 304 receives the instruction for selecting the block mark, move a cursor to a position corresponding to the selected block mark.

In the foregoing embodiment, after a user inputs the second character string, the second character string can be automatically matched in the first character string; that is, if the user needs to position the cursor, automatic positioning can be implemented simply by inputting a character corresponding to a position that needs to be located. Besides, the position is marked by means of a block, so that the user can conveniently move the cursor to the wanted position, and therefore efficiency of error correction can be improved.

The first character string and the second character string are both character strings, and "first" and "second" are merely used to distinguish two logically different character strings, and should not be understood as other limiting meanings. A length of a character string increases when a user inputs characters, the character string is divided into segments, and each segment of the character string may be considered as one independent character string. Two examples of character string segmentation solutions are given in this embodiment of the present invention. It should be noted that there may be many character string segmentation solutions, and the following examples should not be understood as limitations on this embodiment of the present invention. Examples of the character string segmentation solutions provided in this embodiment of the present invention are as follows: Optionally, as shown in FIG. 4, the character receiving unit 301 includes a character receiving subunit 401 and a character string segmentation unit 402, where
the character receiving subunit 401 is configured to receive an input character, and acquire an input time interval between the currently input character and a previous character of the current character; and
the character string segmentation unit 402 is configured to: if the input time interval acquired by the character receiving subunit 401 is greater than a predetermined threshold, use characters that are input before the current character as the first character string, and use the current character and characters that are input later as the second character string; or if the character received by the character receiving subunit 401 is a space character, use characters that are input before the space character as the first character string, and use characters that are input after the space character as the second character string.

Generally, when a user finds an input error, a phenomenon that the user habitually pauses inputting occurs. Based on this, the solution is designed to determine whether there is an input error by means of an input time interval. In this way, an automatic detection function can be implemented, and the user does not need to input an instruction that is used for instructing a terminal to perform segmentation or indicating an input error, thereby reducing a correction time and improving input efficiency. It should also be noted that in the foregoing examples of segmentation, a space character is used to instruct the terminal to perform character string segmentation, and actually, any other default instruction may be used, for example, pressing a shift key twice, or a combination key such as ctrl+G, both of which are applicable. The using a space character to instruct the terminal to perform character string segmentation should not be understood as a uniqueness limitation on this embodiment of the present invention. In this embodiment of the present invention, the character receiving subunit 401 may record a time of inputting each character, calculate an input time interval between adjacent characters, and record the input time interval between adjacent characters by using a long integer variable, and then the character string segmentation unit 402 determines, by comparing the long integer variable with the predetermined threshold, whether segmentation is needed. It should be noted that a variable used for recording an input time is not necessarily a long integer variable, and may be an integer variable or another variable, as long as the variable can be used to record a time accurately.

For the solution of using the input time interval to determine segmentation, this embodiment of the present invention further provides more detailed descriptions by using an example, which is specifically as follows: Optionally, the character string segmentation unit 402 is configured to: if the input time interval acquired by the character receiving subunit 401 is greater than the predetermined threshold, use the characters that are input before the current character as the first character string, and use the current character and the characters that are input later as the second character string, where the predetermined threshold is 800 milliseconds to 1000 milliseconds. The predetermined threshold is used to control a reference time of segmentation. In this embodiment, a reference value of 800 milliseconds to 1000 milliseconds is given, the threshold may vary according to input habits of different people, and therefore, the threshold may be set by a user.

For the solution of identifying the first character string, reference may be made to various algorithms of character identification, which are not limited in this embodiment of the present invention. This embodiment of the present invention provides another preferable implementation solution in the implementation solutions of the present invention, that is, a solution of fuzzy pattern matching, which is specifically as follows: Optionally, the character identification unit 303 is configured to perform fuzzy pattern matching on the first character string by using the second character string, and if the first character string has consecutive characters that have a same character set, a same length, and a same quantity of times of occurrence of a same character as the second character string, determine that the consecutive characters are the substring, which matches the second character string, in the first character string.

By using the solution of fuzzy pattern matching, the user does not need to input characters exactly the same as that of previous erroneous input to determine a position of an error of the previous input, which makes positioning more convenient and fast. In addition, a convenient condition is also provided for correcting the error, which is described in further detail in subsequent embodiments.

Based on the solution of fuzzy pattern matching used by this embodiment of the present invention, this embodiment of the present invention further provides a more preferable feasible implementation solution of error correction, which is specifically as follows: Optionally, as shown in FIG. 5, the instruction receiving unit 304 is further configured to receive a replacement instruction input by a user; and
the character string input control apparatus further includes a replacement control unit 501, configured to: if the instruction receiving unit 304 receives the replacement instruction input by the user, replace the substring with the second character string according to the replacement instruction.

In the foregoing solution, if a user finds an input error, to correct the input error, the user only needs to input a correct character once and select a position that needs to be corrected, which can further improve error correction efficiency.

In this embodiment of the present invention, the replacement instruction may be explicit or may be implicit. An explicit instruction may be an input replacement instruction, and an implicit instruction may be a predefined operation manner, for example, when the user selects the block mark and holds the block mark for more than a predetermined time, it may be considered that the user inputs the replacement instruction. Optionally, the instruction receiving unit 304 is further configured to determine whether the user selects the block mark and holds the block mark for more than a predetermined time; and
the replacement control unit 501 is configured to: if the instruction receiving unit 304 determines that the user selects the block mark and holds the block mark for more than the predetermined time, and characters of the second character string are different from characters of the substring, determine that the replacement instruction input by the user is received, and replace the substring with the second character string.

In this embodiment, a solution in which a user selects the block mark and holds the block mark for more than a predetermined time is used to determine that the user needs to perform character replacement, and this solution may be compatible with a solution of using a short tap to position the cursor. In addition, in a solution of this embodiment, if a user finds an input error, to correct the input error, the user only needs to input a correct character once and select a position that needs to be corrected, and the cursor is positioned at a position corresponding to an erroneous character. In addition to that error correction is implemented by performing inputting once, because the cursor is already moved to the position corresponding to the erroneous character, besides error correction, an operation of adding a character at the position of the error may be performed without needing to perform character positioning again.

Examples of a solution of replacing an input error that needs to be replaced and a solution of positioning a cursor are provided in the foregoing embodiments. An embodiment of the present invention further provides a solution for a case in which an input error does not need to be replaced, for example, a solution for a case in which a character needs to be added and no character needs to be replaced, which is specifically as follows: Optionally, the instruction receiving unit 304 is configured to determine whether the user selects the block mark and holds the block mark for more than a predetermined time; and
the cursor control unit 305 is configured to: if the instruction receiving unit 304 determines that the user selects the block mark and holds the block mark for more than the predetermined time, move the cursor before the replaced substring.

In the foregoing solution, because the second character string is the same as the substring at the located position, no replacement operation is needed, and only moving of the cursor is needed.

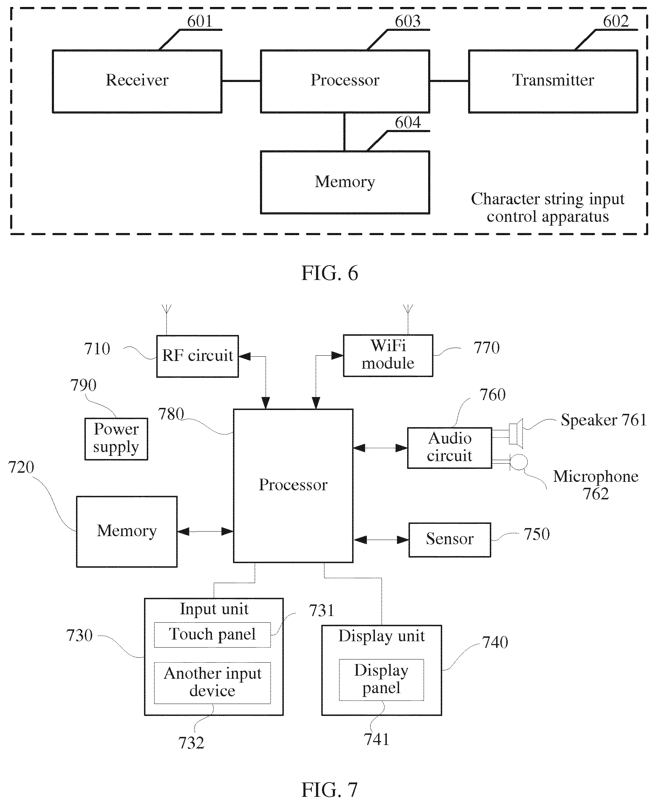

An embodiment of the present invention further provides a character string input control apparatus, as shown in FIG. 6, including: a receiver 601, a transmitter 602, a processor 603, and a memory 604.

The processor 603 is configured to: receive a first character string and a second character string that are input, where the first character string is input before the second character string; identify the first character string, determine whether the first character string has a substring that matches the second character string, and if the first character string has a substring that matches the second character string, mark the substring with a block mark; and after an instruction for selecting the block mark is received, move a cursor to a position corresponding to the selected block mark.

In the foregoing embodiment, after a user inputs the second character string, the second character string can be automatically matched in the first character string; that is, if the user needs to position the cursor, automatic positioning can be implemented simply by inputting a character corresponding to a position that needs to be located. Besides, the position is marked by means of a block, so that the user can conveniently move the cursor to the wanted position, and therefore efficiency of error correction can be improved.

The first character string and the second character string are both character strings, and "first" and "second" are merely used to distinguish two logically different character strings, and should not be understood as other limiting meanings. A length of a character string increases when a user inputs characters, the character string is divided into segments, and each segment of the character string may be considered as one independent character string. Two examples of character string segmentation solutions are given in this embodiment of the present invention. It should be noted that there may be many character string segmentation solutions, and the following examples should not be understood as limitations on this embodiment of the present invention. Examples of the character string segmentation solutions provided in this embodiment of the present invention are as follows: Optionally, the receiving, by the processor 603, a first character string and a second character string that are input includes: receiving an input character, and acquiring an input time interval between the currently input character and a previous character of the current character, and if the input time interval is greater than a predetermined threshold, using characters that are input before the current character as the first character string, and using the current character and characters that are input later as the second character string; or acquiring an input character, and if the input character is a space character, using characters that are input before the space character as the first character string, and using characters that are input after the space character as the second character string.

Generally, when a user finds an input error, a phenomenon that the user habitually pauses inputting occurs. Based on this, the solution is designed to determine whether there is an input error by means of an input time interval. In this way, an automatic detection function can be implemented, and the user does not need to input an instruction that is used for instructing a terminal to perform segmentation or indicating an input error, thereby reducing a correction time and improving input efficiency. It should also be noted that in the foregoing examples of segmentation, a space character is used to instruct the terminal to perform character string segmentation, and actually, any other default instruction may be used, for example, pressing a shift key twice, or a combination key such as ctrl+G, both of which are applicable. The using a space character to instruct the terminal to perform character string segmentation should not be understood as a uniqueness limitation on this embodiment of the present invention.

For the solution of using the input time interval to determine segmentation, this embodiment of the present invention further provides more detailed descriptions by using an example, which is specifically as follows: Optionally, the processor 603 is configured to: receive an input character, and acquire an input time interval between the currently input character and a previous character of the current character; and if the input time interval is greater than the predetermined threshold, use the characters that are input before the current character as the first character string, and use the current character and the characters that are input later as the second character string, where the predetermined threshold is 800 milliseconds to 1000 milliseconds. In this embodiment of the present invention, a time of inputting each character may be recorded, an input time interval between adjacent characters is calculated, the input time interval between adjacent characters is recorded by using a long integer variable, and then whether segmentation is needed is determined by comparing the long integer variable with the predetermined threshold. It should be noted that a variable used for recording an input time is not necessarily a long integer variable, and may be an integer variable or another variable, as long as the variable can be used to record a time accurately. The predetermined threshold is used to control a reference time of segmentation. In this embodiment, a reference value of 800 milliseconds to 1000 milliseconds is given, the threshold may vary according to input habits of different people, and therefore, the threshold may be set by a user.

For the solution of identifying the first character string, reference may be made to various algorithms of character identification, which are not limited in this embodiment of the present invention. This embodiment of the present invention provides another preferable implementation solution in the implementation solutions of the present invention, that is, a solution of fuzzy pattern matching, which is specifically as follows:

Optionally, the determining, by the processor 603, whether the first character string has a substring that matches the second character string includes: performing fuzzy pattern matching on the first character string by using the second character string, and if the first character string has consecutive characters that have a same character set, a same length, and a same quantity of times of occurrence of a same character as the second character string, determining that the consecutive characters are the substring, which matches the second character string, in the first character string.

By using the solution of fuzzy pattern matching, the user does not need to input characters exactly the same as that of previous erroneous input to determine a position of an error of the previous input, which makes positioning more convenient and fast. In addition, a convenient condition is also provided for correcting the error, which is described in further detail in subsequent embodiments.

Based on the solution of fuzzy pattern matching used by this embodiment of the present invention, this embodiment of the present invention further provides a more preferable feasible implementation solution of error correction, which is specifically as follows: Further, the processor 603 is further configured to receive a replacement instruction input by a user, and replace the substring with the second character string according to the replacement instruction.

In the foregoing solution, if a user finds an input error, to correct the input error, the user only needs to input a correct character once and select a position that needs to be corrected, which can improve error correction efficiency.

In this embodiment of the present invention, the replacement instruction may be explicit or may be implicit. An explicit instruction may be an input replacement instruction, and an implicit instruction may be a predefined operation manner, for example, when the user selects the block mark and holds the block mark for more than a predetermined time, it may be considered that the user inputs the replacement instruction. Optionally, the receiving, by the processor 603, a replacement instruction input by a user, and replacing the substring with the second character string according to the replacement instruction includes: if the user selects the block mark and holds the block mark for more than a predetermined time, and characters of the second character string are different from characters of the substring, determining that the replacement instruction input by the user is received, and replacing the substring with the second character string.

In this embodiment, a solution in which a user selects the block mark and holds the block mark for more than a predetermined time is used to determine that the user needs to perform character replacement, and this solution may be compatible with a solution of using a short tap to position the cursor. In addition, in a solution of this embodiment, if a user finds an input error, to correct the input error, the user only needs to input a correct character once and select a position that needs to be corrected, and the cursor is positioned at a position corresponding to an erroneous character. In addition to that error correction is implemented by performing inputting once, because the cursor is already moved to the position corresponding to the erroneous character, besides error correction, an operation of adding a character at the position of the error may be performed without needing to perform character positioning again.

Examples of a solution of replacing an input error that needs to be replaced and a solution of positioning a cursor are provided in the foregoing embodiments. An embodiment of the present invention further provides a solution for a case in which an input error does not need to be replaced, for example, a solution for a case in which a character needs to be added and no character needs to be replaced, which is specifically as follows: Optionally, the moving, by the processor 603, a cursor to a position corresponding to the selected block mark includes: moving the cursor before the replaced substring.

In the foregoing solution, because the second character string is the same as the substring at the located position, no replacement operation is needed, and only moving of the cursor is needed.

An embodiment of the present invention further provides another character string input control apparatus, as shown in FIG. 7; for ease of description, only a part related to this embodiment of the present invention is shown, and for undisclosed technical details, refer to descriptions of methods of the embodiments of the present invention. The terminal may include any terminal device such a mobile phone, a tablet computer, a PDA (Personal Digital Assistant, personal digital assistant), a POS (Point of Sales, point of sales), or a vehicle-mounted computer, and a mobile phone is used as an example of the terminal.

FIG. 7 is a block diagram of the structure of a part of a mobile phone related to a terminal according to an embodiment of the present invention. Referring to FIG. 7, the mobile phone includes components such as a radio frequency (Radio Frequency, RF) circuit 710, a memory 720, an input unit 730, a display unit 740, a sensor 750, an audio circuit 760, a wireless fidelity (wireless fidelity, WiFi) module 770, a processor 780, and a power supply 790. A person skilled in the art may understand that the structure of the mobile phone shown in FIG. 7 does not constitute a limitation on the mobile phone, and the mobile phone may include more components or fewer components than those shown in the figure, or some components may be combined, or a different component deployment may be used.

The following specifically describes the components of the mobile phone with reference to FIG. 7.

The RF circuit 710 may be configured to receive and send signals during an information receiving and sending process or a call process. Particularly, the RF circuit 710 receives downlink information from a base station, then delivers the downlink information to the processor 780 for processing, and sends uplink data to the base station. Generally, the RF circuit 710 includes, but is not limited to, an antenna, at least one amplifier, a transceiver, a coupler, a low noise amplifier (Low Noise Amplifier, LNA), and a duplexer. In addition, the RF circuit 710 may also communicate with a network and another device by means of wireless communication. The wireless communication may use any communications standard or protocol, which includes, but is not limited to, Global System for Mobile Communications (Global System of Mobile communication, GSM), General Packet Radio Service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), e-mail, Short Messaging Service (Short Messaging Service, SMS), and the like.

The memory 720 may be configured to store a software program and module. The processor 780 runs the software program and module stored in the memory 720, to implement various functional applications and data processing of the mobile phone. The memory 720 may mainly include a program storage area and a data storage area. The program storage area may store an operating system, an application program required by at least one function (such as a sound playback function and an image display function), and the like. The data storage area may store data (such as audio data and an address book) created according to use of the mobile phone, and the like. In addition, the memory 720 may include a high speed random access memory, and may also include a non-volatile memory such as at least one magnetic disk storage device, a flash memory, or another volatile solid-state storage device.

The input unit 730 may be configured to receive input digit or character information, and generate a keyboard signal input related to the user setting and function control of the mobile phone. Specifically, the input unit 730 may include a touch panel 731 and another input device 732. The touch panel 731, which may also be referred to as a touchscreen, may collect a touch operation of a user on or near the touch panel (such as an operation of a user on or near the touch panel 731 by using any suitable object or accessory such as a finger or a stylus), and drive a corresponding connection apparatus according to a preset program. Optionally, the touch panel 731 may include two parts: a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and sends the touch point coordinates to the processor 780. Moreover, the touch controller can receive and execute a command sent from the processor 780. In addition, the touch panel 731 may be a resistive, capacitive, infrared, or surface sound wave type touch panel. In addition to the touch panel 731, the input unit 730 may further include the another input device 732. Specifically, the another input device 732 may include, but is not limited to, one or more of a physical keyboard, a functional key (such as a volume control key or a switch key), a track ball, a mouse, and a joystick.

The display unit 740 may be configured to display information input by the user or information provided for the user, and various menus of the mobile phone. The display unit 740 may include a display panel 741. Optionally, the display panel 741 may be configured by using a liquid crystal display (Liquid Crystal Display, LCD), an organic light-emitting diode (Organic Light-Emitting Diode, OLED), or the like. Further, the touch panel 731 may cover the display panel 741. After detecting a touch operation on or near the touch panel 731, the touch panel 731 transfers the touch operation to the processor 780, so as to determine the type of the touch event. Then, the processor 880 provides a corresponding visual output on the display panel 741 according to the type of the touch event. Although, in FIG. 7, the touch panel 731 and the display panel 741 are used as two separate parts to implement input and output functions of the mobile phone, in some embodiments, the touch panel 731 and the display panel 741 may be integrated to implement the input and output functions of the mobile phone.

The mobile phone may further include at least one sensor 750 such as an optical sensor, a motion sensor, and other sensors. Specifically, the optical sensor may include an ambient light sensor and a proximity sensor. The ambient light sensor may adjust luminance of the display panel 741 according to brightness of the ambient light. The proximity sensor may switch off the display panel 741 and/or backlight when the mobile phone is moved to the ear. As one type of motion sensor, an acceleration sensor may detect magnitude of accelerations in various directions (generally on three axes), may detect magnitude and a direction of the gravity when static, and may be applied to an application that recognizes the attitude of the mobile phone (for example, switching between landscape orientation and portrait orientation, a related game, and magnetometer attitude calibration), a function related to vibration recognition (such as a pedometer and a knock), and the like. Other sensors such as a gyroscope, a barometer, a hygrometer, a thermometer, and an infrared sensor, which may be configured in the mobile phone, are not further described herein.

The audio circuit 760, a speaker 761, and a microphone 762 may provide audio interfaces between the user and the mobile phone. The audio circuit 760 may convert received audio data into an electric signal and transmit the electric signal to the speaker 761. The speaker 761 converts the electric signal into a sound signal for output. On the other hand, the microphone 762 converts a collected sound signal into an electric signal. The audio circuit 760 receives the electric signal and converts the electric signal into audio data, and outputs the audio data to the processor 780 for processing. Then, the processor 780 sends the audio data to, for example, another mobile phone by using the RF circuit 710, or outputs the audio data to the memory 720 for further processing.

WiFi belongs to a short distance wireless transmission technology. The mobile phone may help, by using the WiFi module 770, the user to receive and send e-mails, browse a webpage, access streaming media, and so on, which provides wireless broadband Internet access for the user. Although FIG. 7 shows the WiFi module 770, it may be understood that the WiFi module is not a necessary component of the mobile phone, and when required, the WiFi module may be omitted as long as the scope of the essence of the present invention is not changed.

The processor 780 is the control center of the mobile phone, and is connected to various parts of the mobile phone by using various interfaces and lines. By running or executing the software program and/or module stored in the memory 720, and invoking data stored in the memory 720, the processor 780 performs various functions and data processing of the mobile phone, thereby performing overall monitoring on the mobile phone. Optionally, the processor 780 may include one or more processing units. Preferably, the processor 780 may integrate an application processor and a modem. The application processor mainly processes an operating system, a user interface, an application program, and the like. The modem mainly processes wireless communication. It may be understood that the foregoing modem may also not be integrated into the processor 780.

The mobile phone further includes the power supply 790 (such as a battery) for supplying power to the components. Preferably, the power supply may be logically connected to the processor 780 by using a power management system, thereby implementing functions such as charging, discharging and power consumption management by using the power management system.

Although not shown in the figure, the mobile phone may further include a camera, a Bluetooth module, and the like, which are not further described herein.

In this embodiment of the present invention, the processor 780 included in the terminal further has the following functions:

The processor 780 is configured to: receive a first character string and a second character string that are input; identify the first character string, determine a position, in the first character string, of the second character string, and mark the position with a block; and after an instruction for selecting a block mark is received, move a cursor to a position corresponding to the selected block mark.

In the foregoing embodiment, after a user inputs the second character string, the second character string can be automatically matched in the first character string; that is, if the user needs to position the cursor, automatic positioning can be implemented simply by inputting a character corresponding to a position that needs to be located. Besides, the position is marked by means of a block, so that the user can conveniently move the cursor to the wanted position, and therefore efficiency of error correction can be improved.

The first character string and the second character string are both character strings, and "first" and "second" are merely used to distinguish two logically different character strings, and should not be understood as other limiting meanings. A length of a character string increases when a user inputs characters, the character string is divided into segments, and each segment of the character string may be considered as one independent character string. Two examples of character string segmentation solutions are given in this embodiment of the present invention. It should be noted that there may be many character string segmentation solutions, and the following examples should not be understood as limitations on this embodiment of the present invention. Examples of the character string segmentation solutions provided in this embodiment of the present invention are as follows: Optionally, the receiving, by the processor 780, a first character string and a second character string that are input includes: receiving an input character, and acquiring an input time interval between the currently input character and a previous character of the current character, and if the input time interval is greater than a predetermined threshold, using characters that are input before the current character as the first character string, and using the current character and characters that are input later as the second character string; or acquiring an input character, and if the input character is a space character, using characters that are input before the space character as the first character string, and using characters that are input after the space character as the second character string.

Generally, when a user finds an input error, a phenomenon that the user habitually pauses inputting occurs. Based on this, the solution is designed to determine whether there is an input error by means of an input time interval. In this way, an automatic detection function can be implemented, and the user does not need to input an instruction that is used for instructing a terminal to perform segmentation or indicating an input error, thereby reducing a correction time and improving input efficiency. It should also be noted that in the foregoing examples of segmentation, a space character is used to instruct the terminal to perform character string segmentation, and actually, any other default instruction may be used, for example, pressing a shift key twice, or a combination key such as ctrl+G, both of which are applicable. The using a space character to instruct the terminal to perform character string segmentation should not be understood as a uniqueness limitation on this embodiment of the present invention.

For the solution of using the input time interval to determine segmentation, this embodiment of the present invention further provides more detailed descriptions by using an example, which is specifically as follows: Optionally, the processor 780 is configured to: receive an input character, and acquire an input time interval between the currently input character and a previous character of the current character; and if the input time interval is greater than the predetermined threshold, use the characters that are input before the current character as the first character string, and use the current character and the characters that are input later as the second character string, where the predetermined threshold is 800 milliseconds to 1000 milliseconds. In this embodiment of the present invention, a time of inputting each character may be recorded, an input time interval between adjacent characters is calculated, the input time interval between adjacent characters is recorded by using a long integer variable, and then whether segmentation is needed is determined by comparing the long integer variable with the predetermined threshold. It should be noted that a variable used for recording an input time is not necessarily a long integer variable, and may be an integer variable or another variable, as long as the variable can be used to record a time accurately. The predetermined threshold is used to control a reference time of segmentation. In this embodiment, a reference value of 800 milliseconds to 1000 milliseconds is given, the threshold may vary according to input habits of different people, and therefore, the threshold may be set by a user.

For the solution of identifying the first character string, reference may be made to various algorithms of character identification, which are not limited in this embodiment of the present invention. This embodiment of the present invention provides another preferable implementation solution in the implementation solutions of the present invention, that is, a solution of fuzzy pattern matching, which is specifically as follows:

Optionally, the determining, by the processor 780, whether the first character string has a substring that matches the second character string includes: performing fuzzy pattern matching on the first character string by using the second character string, and if the first character string has consecutive characters that have a same character set, a same length, and a same quantity of times of occurrence of a same character as the second character string, determining that the consecutive characters are the substring, which matches the second character string, in the first character string.

By using the solution of fuzzy pattern matching, the user does not need to input characters exactly the same as that of previous erroneous input to determine a position of an error of the previous input, which makes positioning more convenient and fast. In addition, a convenient condition is also provided for correcting the error, which is described in further detail in subsequent embodiments.

Based on the solution of fuzzy pattern matching used by this embodiment of the present invention, this embodiment of the present invention further provides a more preferable feasible implementation solution of error correction, which is specifically as follows: Further, the processor 780 is further configured to receive a replacement instruction input by a user, and replace the substring with the second character string according to the replacement instruction.

In the foregoing solution, if a user finds an input error, to correct the input error, the user only needs to input a correct character once and select a position that needs to be corrected, which can further improve error correction efficiency.

In this embodiment of the present invention, the replacement instruction may be explicit or may be implicit. An explicit instruction may be an input replacement instruction, and an implicit instruction may be a predefined operation manner, for example, when the user selects the block mark and holds the block mark for more than a predetermined time, it may be considered that the user inputs the replacement instruction. Optionally, the receiving, by the processor 780, a replacement instruction input by a user, and replacing the substring with the second character string according to the replacement instruction includes: if the user selects the block mark and holds the block mark for more than a predetermined time, and characters of the second character string are different from characters of the substring, determining that the replacement instruction input by the user is received, and replacing the substring with the second character string.

In this embodiment, a solution in which a user selects the block mark and holds the block mark for more than a predetermined time is used to determine that the user needs to perform character replacement, and this solution may be compatible with a solution of using a short tap to position the cursor. In addition, in a solution of this embodiment, if a user finds an input error, to correct the input error, the user only needs to input a correct character once and select a position that needs to be corrected, and the cursor is positioned at a position corresponding to an erroneous character. In addition to that error correction is implemented by performing inputting once, because the cursor is already moved to the position corresponding to the erroneous character, besides error correction, an operation of adding a character at the position of the error may be performed without needing to perform character positioning again.

Examples of a solution of replacing an input error that needs to be replaced and a solution of positioning a cursor are provided in the foregoing embodiments. An embodiment of the present invention further provides a solution for a case in which an input error does not need to be replaced, for example, a solution for a case in which a character needs to be added and no character needs to be replaced, which is specifically as follows: Optionally, the moving, by the processor 780, a cursor to a position corresponding to the selected block mark includes: moving the cursor before the replaced substring.

In the foregoing solution, because the second character string is the same as the substring at the located position, no replacement operation is needed, and only moving of the cursor is needed.

It should be noted that, the apparatus division is merely logical function division, but the present invention is not limited to the foregoing division, as long as corresponding functions can be implemented. In addition, specific names of the functional units are merely provided for the purpose of distinguishing the units from one another, but are not intended to limit the protection scope of the present invention.

In addition, a person of ordinary skill in the art may understand that all or a part of the steps of the method embodiments may be implemented by a program instructing relevant hardware. The program may be stored in a computer readable storage medium. The storage medium may include: a read-only memory, a magnetic disk, or an optical disc.

The foregoing descriptions are merely exemplary implementation manners of the present invention, but are not intended to limit the protection scope of the present invention. Any variation or replacement readily figured out by a person skilled in the art within the technical scope disclosed in the embodiments of the present invention shall fall within the protection scope of the present invention. Therefore, the protection scope of the present invention shall be subject to the protection scope of the claims.

## Claims

1. A character string input control method, comprising:
receiving a first character string and a second character string that are input, wherein the first character string is input before the second character string;
identifying the first character string, determining whether the first character string has a substring that matches the second character string, and if the first character string has a substring that matches the second character string, marking the substring with a block mark; and
after an instruction for selecting the block mark is received, moving a cursor to a position corresponding to the selected block mark.

2. The method according to claim 1, wherein the receiving a first character string and a second character string that are input comprises:
receiving an input character, and acquiring an input time interval between the currently input character and a previous character of the current character, and if the input time interval is greater than a predetermined threshold, using characters that are input before the current character as the first character string, and using the current character and characters that are input later as the second character string; or
acquiring an input character, and if the input character is a space character, using characters that are input before the space character as the first character string, and using characters that are input after the space character as the second character string.

3. The method according to claim 2, wherein the predetermined threshold of the input time interval is 800 milliseconds to 1000 milliseconds.

4. The method according to claim 1, wherein the determining whether the first character string has a substring that matches the second character string comprises:
performing fuzzy pattern matching on the first character string by using the second character string, and if the first character string has consecutive characters that have a same character set, a same length, and a same quantity of times of occurrence of a same character as the second character string, determining that the consecutive characters are the substring, which matches the second character string, in the first character string.

5. The method according to any one of claims 1 to 4, wherein after the marking the substring with a block mark, the method further comprises:
receiving a replacement instruction input by a user, and replacing the substring with the second character string according to the replacement instruction.

6. The method according to claim 5, wherein the receiving a replacement instruction input by a user, and replacing the substring with the second character string according to the replacement instruction comprises: if the user selects the block mark and holds the block mark for more than a predetermined time, and characters of the second character string are different from characters of the substring, determining that the replacement instruction input by the user is received, and replacing the substring with the second character string.

7. The method according to claim 5, wherein the moving a cursor to a position corresponding to the selected block mark comprises:
moving the cursor before the replaced substring.

8. A character string input control apparatus, comprising:
a character receiving unit, configured to receive a first character string and a second character string that are input, wherein the first character string is input before the second character string;
a character identification unit, configured to identify the first character string that is received by the character receiving unit, and determine whether the first character string has a substring that matches the second character string;
a character marking unit, configured to: if a determining result of the character identification unit is that the first character string has a substring that matches the second character string, mark the substring with a block mark;
an instruction receiving unit, configured to receive an instruction for selecting the block mark; and
a cursor control unit, configured to: after the instruction receiving unit receives the instruction for selecting the block mark, move a cursor to a position corresponding to the selected block mark.

9. The character string input control apparatus according to claim 8, wherein the character receiving unit comprises: a character receiving subunit and a character string segmentation unit, wherein
the character receiving subunit is configured to receive an input character, and acquire an input time interval between the currently input character and a previous character of the current character; and
the character string segmentation unit is configured to: if the input time interval acquired by the character receiving subunit is greater than a predetermined threshold, use characters that are input before the current character as the first character string, and use the current character and characters that are input later as the second character string; or if the character received by the character receiving subunit is a space character, use characters that are input before the space character as the first character string, and use characters that are input after the space character as the second character string.

10. The character string input control apparatus according to claim 9, wherein
the character string segmentation unit is configured to: if the input time interval acquired by the character receiving subunit is greater than the predetermined threshold, use the characters that are input before the current character as the first character string, and use the current character and the characters that are input later as the second character string, wherein the predetermined threshold is 800 milliseconds to 1000 milliseconds.

11. The character string input control apparatus according to claim 8, wherein
the character identification unit is configured to perform fuzzy pattern matching on the first character string by using the second character string, and if the first character string has consecutive characters that have a same character set, a same length, and a same quantity of times of occurrence of a same character as the second character string, determine that the consecutive characters are the substring, which matches the second character string, in the first character string.

12. The character string input control apparatus according to any one of claims 8 to 11, wherein the instruction receiving unit is further configured to receive a replacement instruction input by a user; and
the character string input control apparatus further comprises a replacement control unit, configured to: if the instruction receiving unit receives the replacement instruction input by the user, replace the substring with the second character string according to the replacement instruction.

13. The character string input control apparatus according to claim 12, wherein
the instruction receiving unit is further configured to determine whether the user selects the block mark and holds the block mark for more than a predetermined time; and
the replacement control unit is configured to: if the instruction receiving unit determines that the user selects the block mark and holds the block mark for more than the predetermined time, and characters of the second character string are different from characters of the substring, determine that the replacement instruction input by the user is received, and replace the substring with the second character string.

14. The character string input control apparatus according to claim 12, wherein
the cursor control unit is configured to: if the instruction receiving unit determines that the user selects the block mark and holds the block mark for more than the predetermined time, move the cursor before the replaced substring.
